# EUROPEAN PATENT APPLICATION

(11) **EP 3 996 185 A1**
(43) Date of publication of application: **11.05.2022**
(21) Application number: 20875883.9
(22) Date of filing: 21.09.2020
(51) Int. Cl.: H01M 10/637, H01M 10/658, H01M 10/625, H01M 10/48

(54) **BATTERY PACK AND VEHICLE COMPRISING BATTERY PACK**

(30) Priority: 18.10.2019 KR 20190130070
(71) Applicant: LG Energy Solution, Ltd., Seoul 07335 (KR)
(72) Inventor: CHOI, Jee-Soon, Daejeon 34122 (KR); KIM, Se-Won, Daejeon 34122 (KR); PARK, Sang-Jun, Daejeon 34122 (KR); KANG, Dal-Mo, Daejeon 34122 (KR); BAE, Gyu-Jong, Daejeon 34122 (KR); LEE, Sang-Hoon, Daejeon 34122 (KR); CHO, Hyun-Ki, Daejeon 34122 (KR); CHOI, Yong-Seok, Daejeon 34122 (KR)
(74) Representative: Plasseraud IP
(86) International application number: PCT/KR2020/012731
(87) International publication number: WO 2021/075743

(57) **Abstract**

Disclosed is a battery pack, which includes a pack case having a predetermined accommodation space, a plurality of battery modules accommodated in the pack case and having a plurality of battery cells stacked on each other, at least one partition isolation member disposed to compart the plurality of battery modules in a direction parallel to a stacking direction of the plurality of battery cells, a plurality of bus bar members configured to electrically connect the plurality of battery modules, a plurality of relay units connected to the plurality of bus bar members, and an outer resistor unit connected to the plurality of relay units and provided at one inner side of the pack case.

## Description

### TECHNICAL FIELD

The present application claims priority to Korean Patent Application No. 10-2019-0130070 filed on October 18, 2019 in the Republic of Korea, the disclosures of which are incorporated herein by reference.

The present disclosure relates to a battery pack and a vehicle including the battery pack.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing energy efficiency and environment friendliness in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module composed of at least one battery cell first, and then configure a battery pack by using at least one battery module and adding other components.

The conventional battery pack includes battery modules, each having a plurality of battery cells. Here, when an abnormal situation occurs due to expansion of a battery cell in any one battery module, if the abnormal situation is not quickly solved, thermal runaway may propagate to neighboring battery modules, which may lead to explosion or the like of the battery pack and thus cause a great danger to the user.

Therefore, when an abnormal situation occurs at a specific battery cell of the battery module, it is necessary to promptly solve the abnormal situation. In particular, it is necessary to secure safety by preventing propagation of the thermal runaway before the thermal runaway leads to neighboring the surrounding battery modules to cause explosion or fire of the battery pack.

### DISCLOSURE

### Technical Problem

The present disclosure is directed to providing a battery pack, which may improve the safety by preventing thermal runaway, and a vehicle including the battery pack.

### Technical Solution

In one aspect of the present disclosure, there is provided a battery pack, comprising: a pack case having a predetermined accommodation space; a plurality of battery modules accommodated in the pack case and having a plurality of battery cells stacked on each other; at least one partition isolation member disposed to compart the plurality of battery modules in a direction parallel to a stacking direction of the plurality of battery cells; a plurality of bus bar members configured to electrically connect the plurality of battery modules; a plurality of relay units connected to the plurality of bus bar members; and an outer resistor unit connected to the plurality of relay units and provided at one inner side of the pack case.

The battery pack may further comprise a resistance isolation member provided in the pack case and disposed to compart the outer resistor unit and the plurality of battery modules from each other.

The plurality of battery modules may include a first battery module assembly having a plurality of battery modules disposed to be spaced apart from each other by a predetermined distance along a longitudinal direction of the pack case; and a second battery module assembly disposed to be spaced apart from the first battery module assembly by a predetermined distance in a width direction of the pack case and having a plurality of battery modules disposed to be spaced apart from each other by a predetermined distance along the longitudinal direction of the pack case.

The battery cells of the battery modules of the first battery module assembly and the second battery module assembly may be stacked on each other along the longitudinal direction of the pack case.

The at least one partition isolation member may be disposed between the first battery module assembly and the second battery module assembly.

The battery cells of the battery modules of the first battery module assembly and the second battery module assembly may be stacked on each other along the width direction of the pack case.

The partition isolation member may be provided in plural, and the plurality of partition isolation members may be respectively disposed the battery modules of the first battery module assembly and the second battery module assembly along the longitudinal direction of the pack case.

Among the plurality of bus bar members, bus bar members disposed at one side end of the pack case may be electrically connected to an external power source or the like.

The resistance isolation member may be disposed at the other side end of the pack case.

The battery pack may further comprise a plurality of temperature sensors electrically connected to the plurality of battery modules.

The battery pack may further comprise a control unit electrically connected to the relay units, the outer resistor unit and the temperature sensors to control the operation of the relay units based on temperature information detected by the temperature sensors.

The outer resistor unit may be mounted to the pack case so as to be separable from the pack case.

In addition, the present disclosure provides a vehicle comprising: at least one battery pack according to the above embodiments.

### Advantageous Effects

According to various embodiments as above, it is possible to provide a battery pack, which may improve the safety by preventing thermal runaway, and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is an enlarged view showing a main part of the battery cell of FIG. 1.
FIGS. 3 and 4 are diagrams for illustrating a thermal runaway prevention mechanism of the battery pack of FIG. 1.
FIG. 5 is a diagram for illustrating a battery pack according to another embodiment of the present disclosure.
FIG. 6 is a diagram for illustrating a battery pack according to still another embodiment of the present disclosure.
FIG. 7 is a diagram for illustrating a battery pack according to still another embodiment of the present disclosure.
FIG. 8 is a diagram for illustrating a thermal runaway prevention mechanism of the battery pack of FIG. 7.
FIG. 9 is a diagram for illustrating a battery pack according to still another embodiment of the present disclosure.
FIG. 10 is a diagram for illustrating a vehicle according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

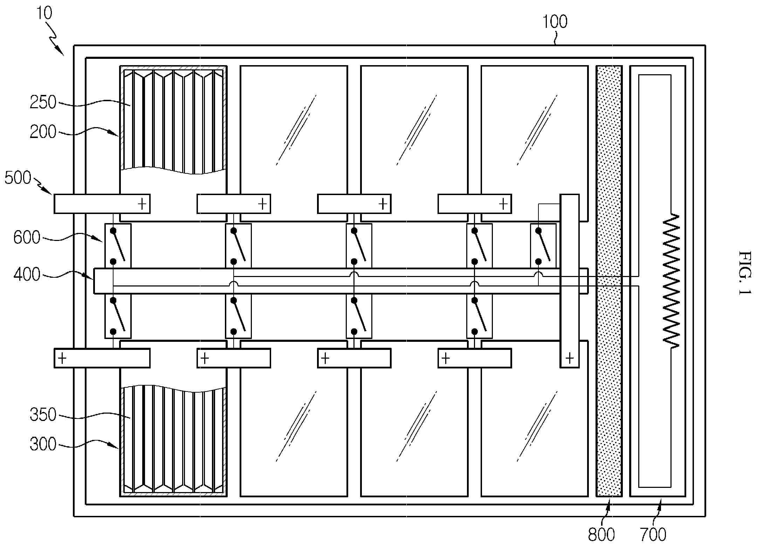

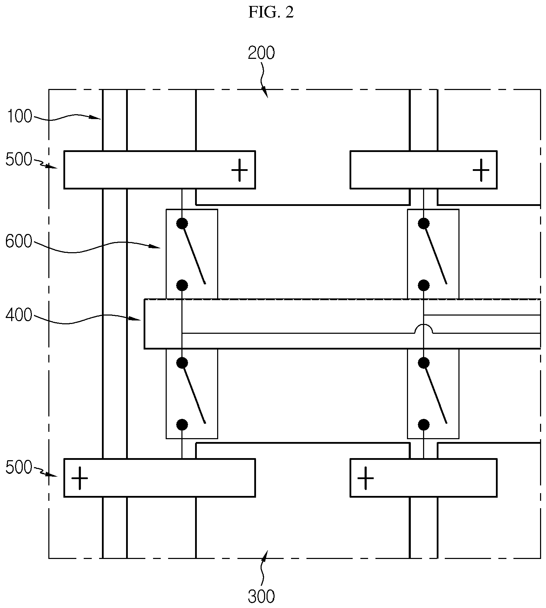

FIG. 1 is a diagram for illustrating a battery pack according to an embodiment of the present disclosure, and FIG. 2 is an enlarged view showing a main part of the battery cell of FIG. 1.

Referring to FIGS. 1 and 2, a battery pack 10 may include a pack case 100, battery modules 200, 300, a partition isolation member 400, a bus bar member 500, a relay unit 600, an outer resistor unit 700 and a resistance isolation member 800.

The pack case 100 may be mounted to a vehicle 1, explained later, and may have a predetermined accommodation space therein. The pack case 100 may accommodate a plurality of battery modules 200, 300, explained later.

The battery modules 200, 300 are accommodated in the pack case 100 and may have a plurality of battery cells 250, 350 stacked on each other.

The battery modules 200, 300 may include a first battery module assembly 200 and a second battery module assembly 300.

The first battery module assembly 200 may include a plurality of battery modules 200, which are disposed to be spaced apart from each other by a predetermined distance along a longitudinal direction of the pack case 100.

Each of the plurality of battery modules 200 of the first battery module assembly 200 may include a plurality of battery cells 250.

The plurality of battery cells 250 are secondary batteries and may be as at least one of pouch-type secondary batteries, rectangular secondary batteries and cylindrical secondary batteries. Hereinafter, in this embodiment, the battery cells 250 will be described as pouch-type secondary batteries. The plurality of battery cells 250 may be stacked on each other along the longitudinal direction of the pack case 100.

The second battery module assembly 300 may be disposed to be spaced apart from the first battery module assembly 200 by a predetermined distance in a width direction of the pack case 100. The second battery module assembly 300 may include a plurality of battery modules 300, which are disposed to be spaced apart from each other by a predetermined distance along the longitudinal direction of the pack case 100.

Each of the plurality of battery modules 300 of the second battery module assembly 300 may include a plurality of battery cells 350.

The plurality of battery cells 350 are secondary batteries and may be as at least one of pouch-type secondary batteries, rectangular secondary batteries and cylindrical secondary batteries. Hereinafter, in this embodiment, the battery cells 350 will be described as pouch-type secondary batteries. The plurality of battery cells 350 may be stacked on each other along the longitudinal direction of the pack case 100.

The partition isolation member 400 may be disposed to compart the plurality of battery modules 200, 300 in a direction parallel to a stacking direction of the plurality of battery cells 250, 350.

The partition isolation member 400 may be disposed between the first battery module assembly 200 and the second battery module assembly 300 and be formed to have a predetermined length along the longitudinal direction of the pack case 200.

When overheating occurs due to an abnormal situation at the battery modules 200, 300 at any one side, the partition isolation member 400 may effectively block heat transfer to the battery modules 200, 300 at the other side. For example, when overheating occurs at the first battery module assembly 200, the partition isolation member 400 may effectively block direct heat transfer to the second battery module assembly 300.

The bus bar member 500 is for electrically connecting the plurality of battery modules 200, 300, and may be provided in plural. Among the plurality of bus bar members 500, bus bar members 500 disposed at one side end of the pack case 100, specifically at an outermost side of the pack case 100, which is opposite to the outer resistor unit 700, explained later, may be electrically connected to an external power source or the like.

The relay unit 600 is provided in plural, and may be connected to the plurality of bus bar members 500. The plurality of relay units 600 are connected to the outer resistor unit 600, explained later. The plurality of relay units 600 may be operated when expansion, overcurrent or overheating occurs due to an abnormal situation in at least one of the battery cells 250, 350 of specific battery modules 200, 300, so that the current of the specific battery cell 250, 350 in which the abnormal situation has occurred is induced to the outer resistor unit 700, explained later.

The outer resistor unit 700 is connected to the plurality of relay units 600, and may be provided at one inner side of the pack case 100. Specifically, the outer resistor unit 600 may be disposed at the other side end of the pack case 100.

When the relay unit 600 connected to specific battery module 200, 300 in which an abnormal condition occurs is operated, the outer resistor unit 700 may rapidly short-circuit the specific battery module 200, 300 in which an abnormal condition occurs, so that the thermal runaway is effectively prevented from propagating neighboring battery modules 200, 300.

The resistance isolation member 800 is provided in the pack case 100 and may be disposed to compart the outer resistor unit 600 and the plurality of battery modules 200, 300. The resistance isolation member 800 may block the heat generated at the outer resistor unit 600 not to be transferred to neighboring battery modules 200, 300.

Hereinafter, a thermal runaway prevention mechanism of the battery pack 10 according to this embodiment will be described in detail.

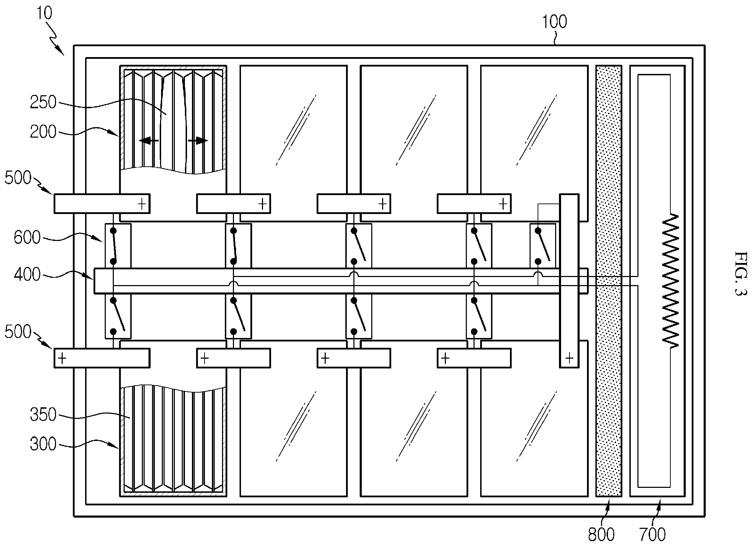

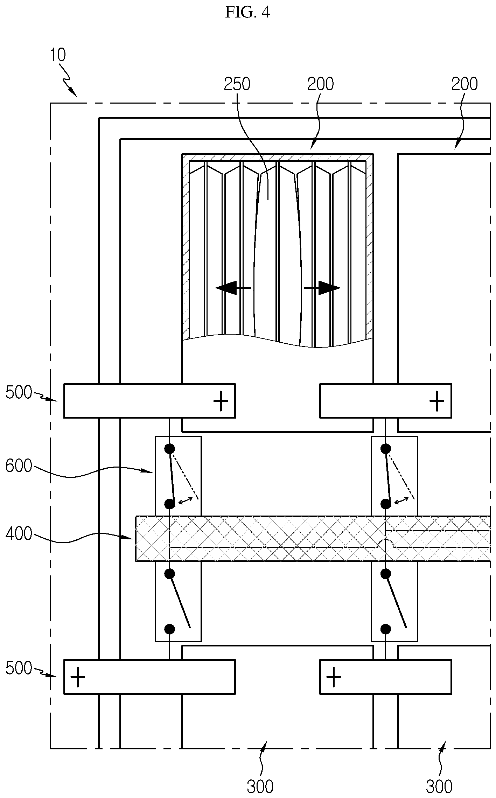

FIGS. 3 and 4 are diagrams for illustrating a thermal runaway prevention mechanism of the battery pack of FIG. 1.

Referring to FIGS. 3 and 4, in the battery pack 10, an abnormal situation may occur at a specific battery module 200, 300 among the plurality of battery modules 200, 300. The abnormal situation may be an expansion, overcurrent or overheating situation of the battery cells 250, 350 of the specific battery module 200, 300.

In this embodiment, as an example, the thermal runaway prevention mechanism will be described based on the case where an abnormal situation occurs in the battery module 200 of the first battery module assembly 200 disposed at a side opposite to the outer resistor unit 600.

When an abnormal situation occurs in a specific battery cell 250 of the battery module 200, the pair of relay units 600 connected to the bus bar members 500 connected to the specific battery module 200 may operate. That is, the pair of relay units 600 connected to the specific battery module 200 in which an abnormal situation has occurred may operate to induce the current of the specific battery module 200 in which the abnormal situation has occurred toward the outer resistor unit 700, explained later. The operation of the pair of relay units 600 may be an active manner or a passive manner.

By inducing the current of the pair of relay units 600, the outer resistor unit 700 may more rapidly short-circuit the specific battery module 200 in which the abnormal situation occurs, thereby effectively preventing the thermal runaway from propagating to neighboring battery modules 200, 300 adjacent to the specific battery module 200 in which the abnormal situation has occurred.

In particular, through the external short circuit through the relay unit 600 and the outer resistor unit 700, it is possible to effectively prevent the thermal runaway from propagating to neighboring battery modules 200, 300 even though the additional partition isolation member 400 is not added between the battery modules 200, 300 in a stacking direction of the battery cells 250, 350 (a left and right direction in FIG. 4).

In this way, when an abnormal situation occurs in at least one battery cell 250, 350 of the specific battery module 200, 300, the battery pack 10 according to this embodiment may quickly short-circuit only the battery module 200, 300 in which the abnormal situation has occurred, so that the thermal runaway is quickly prevented from propagating toward neighboring battery modules 200, 300.

Therefore, the battery pack 10 according to this embodiment may significantly increase the safety of the battery pack 10.

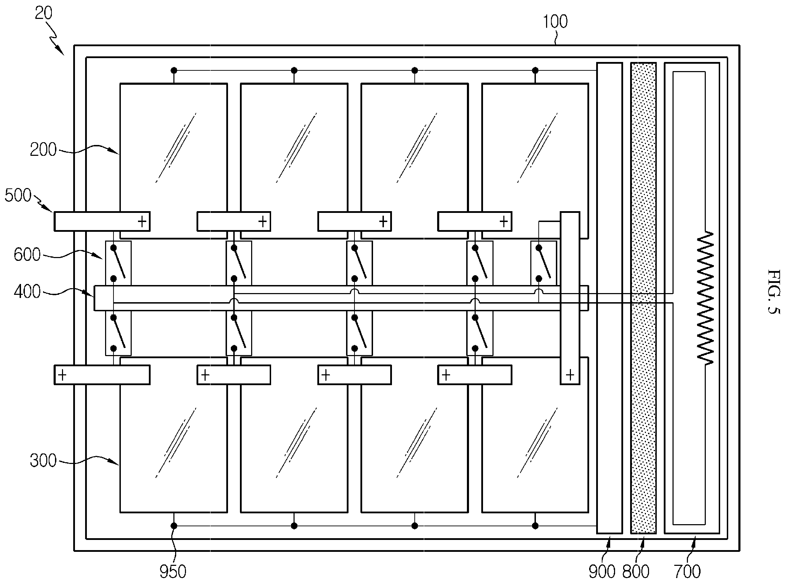

FIG. 5 is a diagram for illustrating a battery pack according to another embodiment of the present disclosure.

A battery pack 20 according to this embodiment is similar to the battery pack 10 of the former embodiment, and thus, hereinafter, features substantially identical or similar to the former embodiment will not be described in detail, and features different from the former embodiment will be described in detail.

Referring to FIG. 5, the battery pack 20 may include a pack case 100, battery modules 200, 300, a partition isolation member 400, a bus bar member 500, a relay unit 600, an outer resistor unit 700, a resistance isolation member 800, a control unit 900 and a temperature sensor 950.

The pack case 100, the battery modules 200, 300, the partition isolation member 400, the bus bar member 500, the relay unit 600, the outer resistor unit 700 and the resistance isolation member 800 are substantially identical or similar to the former embodiment and thus will not be described in detail again.

The control unit 900 may be electrically connected to the relay unit 600, the outer resistor unit 700 and the temperature sensor 950, explained later. The control unit 900 may control the operation of the relay unit 600 based on temperature information detected by the temperature sensor 950, explained later.

The temperature sensor 950 may be provided in plural, and may be electrically connected to the plurality of battery modules 200, 300. The plurality of temperature sensors 950 may be electrically connected to the control unit 900 to transmit the temperature information of the plurality of battery modules 200, 300 to the control unit 900.

In this embodiment, when an overheating situation or the like occurs in a specific battery module 200, 300, the overheating situation may be more quickly identified through the plurality of temperature sensors 950 and the control unit 900, so that the specific battery module 200, 300 in which the overheating situation has occurred may be circuitshorted more quickly by operating the relay unit 600.

Accordingly, the battery module 20 according to this embodiment may more effectively prevent the thermal runaway from propagating toward neighboring battery modules 200, 300 from the specific battery module 200, 300, thereby further enhancing the safety of the battery pack 20.

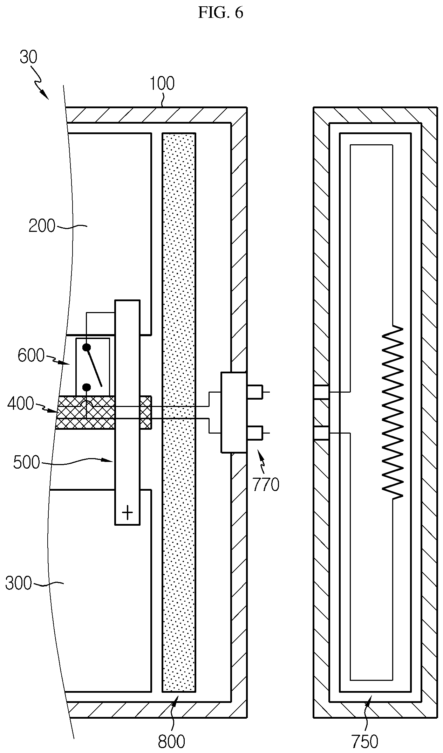

FIG. 6 is a diagram for illustrating a battery pack according to still another embodiment of the present disclosure.

A battery pack 30 according to this embodiment is similar to the battery pack 10 of the former embodiment, and thus, hereinafter, features substantially identical or similar to the former embodiment will not be described in detail, and features different from the former embodiment will be described in detail.

Referring to FIG. 6, the battery pack 30 may include a pack case 100, battery module, 200, 300, a partition isolation member 400, a bus bar member 500, a relay unit 600, an outer resistor unit 750, a resistor unit connector 770 and a resistance isolation member 800.

The pack case 100, the battery module 200, 300, the partition isolation member 400, the bus bar member 500 and the relay unit 600 are substantially identical or similar to the former embodiment and thus will not be described in detail again.

The outer resistor unit 750 may be provided to be separable from the pack case 100. The outer resistor unit 750 may be provided to be detachable from the pack case 100.

The resistor unit connector 770 is provided to the pack case 100, and when the outer resistor unit 750 is mounted, the resistor unit connector 770 may connect the outer resistor unit 750 and the relay units 600 to each other.

The resistance isolation member 800 is substantially identical or similar to the former embodiment and thus will not be described in detail again.

As described above, in this embodiment, the outer resistor unit 750 may be provided in the pack case 100 not in an integral type but in a separable type so as to be detachable therefrom. Accordingly, in this embodiment, the outer resistor unit 750 may be suitably mounted to the pack case 100 as necessary.

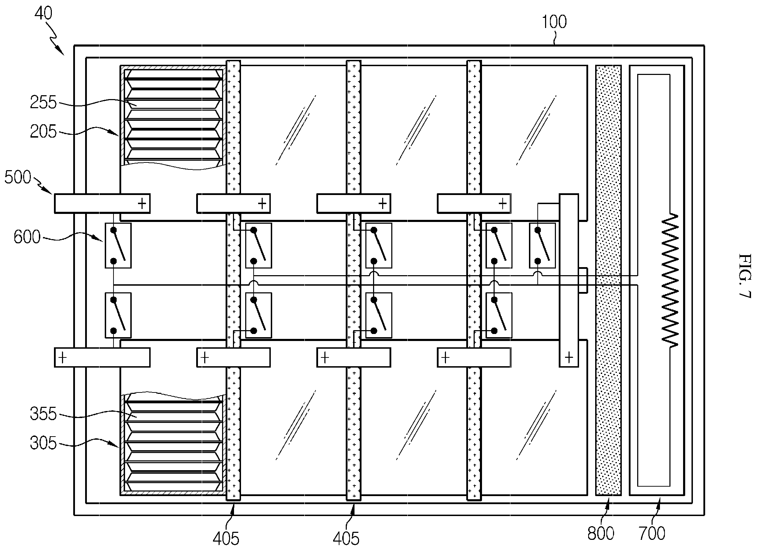

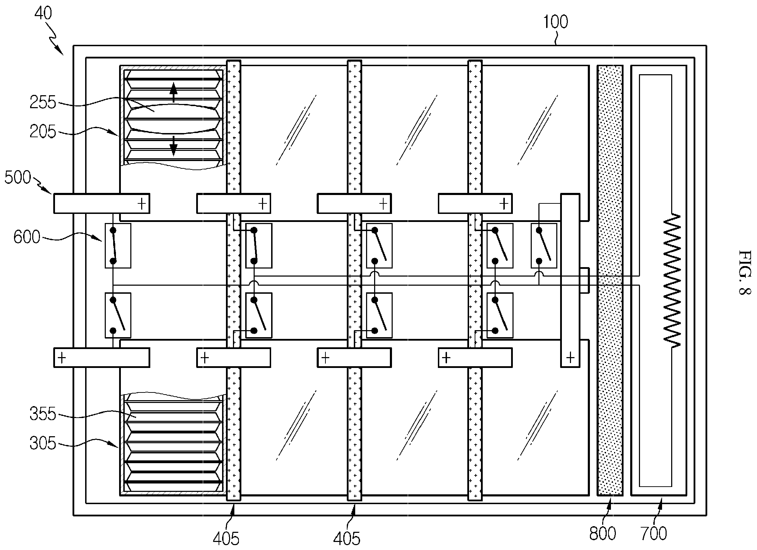

FIG. 7 is a diagram for illustrating a battery pack according to still another embodiment of the present disclosure, and FIG. 8 is a diagram for illustrating a thermal runaway prevention mechanism of the battery pack of FIG. 7.

A battery pack 40 according to this embodiment is similar to the battery pack 10 of the former embodiment, and thus, hereinafter, features substantially identical or similar to the former embodiment will not be described in detail, and features different from the former embodiment will be described in detail.

Referring to FIGS. 7 and 8, the battery pack 40 may include a pack case 100, battery modules 205, 305, a partition isolation member 405, a bus bar member 500, a relay unit 600, an outer resistor unit 700 and a resistance isolation member 800.

The pack case 100 is substantially identical or similar to the former embodiment and thus will not be described in detail again.

The battery modules 205, 305 may include a first battery module assembly 205 and a second battery module assembly 305.

Battery cells 255 of the plurality of battery modules 205 in the first battery module assembly 205 may be stacked on each other along the width direction of the pack case 100.

Battery cells 355 of the plurality of battery modules 305 in the second battery module assembly 305 may be stacked on each other along the width direction of the pack case 100.

The partition isolation member 405 is formed to have a predetermined length along the width direction of the pack case 100, and may be provided in plural.

The plurality of compartments and isolation members 405 may be respectively disposed between the battery modules 205, 305 of the first battery module assembly 205 and the second battery module assembly 305 along the longitudinal direction of the pack case 100.

The bus bar member 500, the relay unit 600, the outer resistor unit 700 and the resistance isolation member 800 are substantially identical or similar to the former embodiment and thus will not be described in detail again.

In the battery pack 40 according to this embodiment, as in the former embodiment, when an abnormal situation occurs in a specific battery cell 255 of the battery module 205, the pair of relay units 600 connected to the bus bar members 500 connected to the specific battery module 205 may operate. That is, the pair of relay units 600 connected to the specific battery module 205 in which the abnormal situation has occurred may operate so that the current of the specific battery module 205 in which the abnormal situation has occurred is induced to the outer resistor unit 700, explained later.

Moreover, the battery pack 40 according to this embodiment may effectively prevent the thermal runaway from propagating to neighboring battery modules 205, 305 through the external short circuit using the relay unit 600 and the outer resistor unit 700, even though the partition isolation member 405 is not added between the first battery module assembly 200 and the second battery module assembly 300 in the longitudinal direction of the pack case 100.

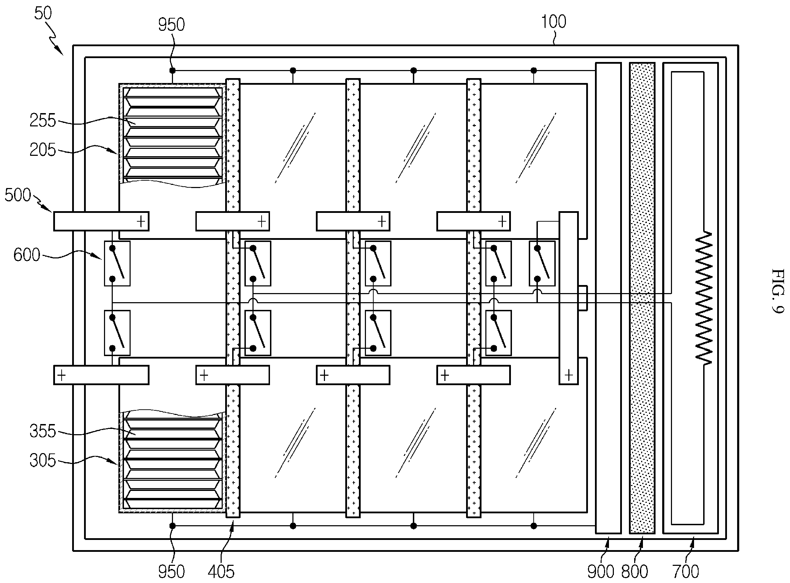

FIG. 9 is a diagram for illustrating a battery pack according to still another embodiment of the present disclosure.

A battery pack 50 according to this embodiment is similar to the battery pack 20, 40 of the former embodiments, and thus, hereinafter, features substantially identical or similar to the former embodiment will not be described in detail, and features different from the former embodiment will be described in detail.

Referring to FIG. 9, the battery pack 50 may include a pack case 100, battery module, 205, 305, a partition isolation member 405, a bus bar member 500, a relay unit 600, an outer resistor unit 700, a resistance isolation member 800, a control unit 900 and a temperature sensor 950.

The pack case 100, the battery module 205, 305, the partition isolation member 405, bus bar member 500, the relay unit 600, the outer resistor unit 700 and the resistance isolation member 800 are substantially identical or similar to the former embodiment and thus will not be described in detail again.

The control unit 900 may be electrically connected to the relay unit 600, the outer resistor unit 700 and the temperature sensor 950, explained later. The control unit 900 may control the operation of the relay unit 600 based on temperature information detected by the temperature sensor 950, explained later.

The temperature sensor 950 is provided in plural, and may be electrically connected to the plurality of battery modules 205, 305. The plurality of temperature sensors 950 may be electrically connected to the control unit 900 to transmit the temperature information of the plurality of battery modules 205, 305 to the control unit 900.

In this embodiment, when an overheating situation or the like occurs in a specific battery module 205, 305, the overheating situation may be more quickly identified through the plurality of temperature sensors 950 and the control unit 900, so that the specific battery module 205, 305 in which the overheating situation has occurred may be circuitshorted more quickly by operating the relay unit 600.

Accordingly, the battery module 50 according to this embodiment may more effectively prevent the thermal runaway from propagating toward neighboring battery modules 205, 305 from the specific battery module 205, 305, thereby further enhancing the safety of the battery pack 50.

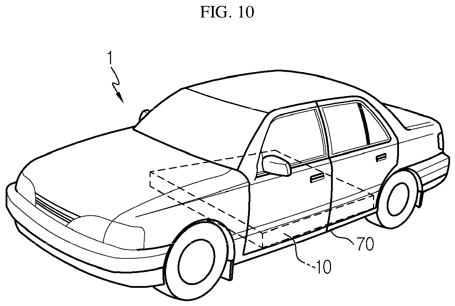

FIG. 10 is a diagram for illustrating a vehicle according to an embodiment of the present disclosure.

Referring to FIG. 10, a vehicle 1 may include the battery pack 10 of the former embodiment and a vehicle body 70 for accommodating the battery pack 10. The vehicle body 70 may include at least one of the battery packs 20, 30, 40, 50 of the former embodiments in addition to the battery pack 10.

Since the vehicle 1 according to this embodiment includes the battery pack 10 of the former embodiment, it is possible to provide the vehicle 1 that includes all the advantages of the battery packs 10 of the former embodiments.

Meanwhile, the battery packs 10, 20, 30, 40, 50 of the former embodiments may be provided to other devices using the battery packs 10, 20, 30, 40, 50 as an energy source, for example an energy storage system, in addition to the vehicle 1.

According to various embodiments as described above, it is possible to provide the battery packs 10, 20, 30, 40, 50 having an improved safety by preventing thermal runaway and the vehicle 1 including the battery pack 10, 20, 30, 40, 50.

While the embodiments of the present disclosure have been shown and described, it should be understood that the present disclosure is not limited to the specific embodiments described, and that various changes and modifications can be made within the scope of the present disclosure by those skilled in the art, and these modifications should not be understood individually from the technical ideas and views of the present disclosure.

### Reference Signs

1: vehicle
10, 20, 30, 40, 50: battery pack
70: vehicle body
100: pack case
200, 205: first battery module assembly
250, 255: battery cell
300, 305: second battery module assembly
350, 355: battery cell
400, 405: partition isolation member
500: bus bar member
600: relay unit
700, 750: outer resistor unit
770: resistor unit connector
800: resistance isolation member
900: control unit
950: temperature sensor

## Claims

1. A battery pack, comprising:
a pack case having a predetermined accommodation space;
a plurality of battery modules accommodated in the pack case and having a plurality of battery cells stacked on each other;
at least one partition isolation member disposed to compart the plurality of battery modules in a direction parallel to a stacking direction of the plurality of battery cells;
a plurality of bus bar members configured to electrically connect the plurality of battery modules;
a plurality of relay units connected to the plurality of bus bar members; and
an outer resistor unit connected to the plurality of relay units and provided at one inner side of the pack case.

2. The battery pack according to claim 1, further comprising:
a resistance isolation member provided in the pack case and disposed to compart the outer resistor unit and the plurality of battery modules from each other.

3. The battery pack according to claim 2,
wherein the plurality of battery modules include:
a first battery module assembly having a plurality of battery modules disposed to be spaced apart from each other by a predetermined distance along a longitudinal direction of the pack case; and
a second battery module assembly disposed to be spaced apart from the first battery module assembly by a predetermined distance in a width direction of the pack case and having a plurality of battery modules disposed to be spaced apart from each other by a predetermined distance along the longitudinal direction of the pack case.

4. The battery pack according to claim 3,
wherein the battery cells of the battery modules of the first battery module assembly and the second battery module assembly are stacked on each other along the longitudinal direction of the pack case.

5. The battery pack according to claim 4,
wherein the at least one partition isolation member is disposed between the first battery module assembly and the second battery module assembly.

6. The battery pack according to claim 3,
wherein the battery cells of the battery modules of the first battery module assembly and the second battery module assembly are stacked on each other along the width direction of the pack case.

7. The battery pack according to claim 6,
wherein the partition isolation member is provided in plural, and
the plurality of partition isolation members are respectively disposed the battery modules of the first battery module assembly and the second battery module assembly along the longitudinal direction of the pack case.

8. The battery pack according to claim 2,
wherein among the plurality of bus bar members, bus bar members disposed at one side end of the pack case are electrically connected to an external power source.

9. The battery pack according to claim 8,
wherein the resistance isolation member is disposed at the other side end of the pack case.

10. The battery pack according to claim 1, further comprising:
a plurality of temperature sensors electrically connected to the plurality of battery modules.

11. The battery pack according to claim 10, further comprising:
a control unit electrically connected to the relay units, the outer resistor unit and the temperature sensors to control the operation of the relay units based on temperature information detected by the temperature sensors.

12. The battery pack according to claim 1,
wherein the outer resistor unit is mounted to the pack case so as to be separable from the pack case.

13. A vehicle, comprising at least one battery pack according to claim 1.
